# EUROPEAN PATENT APPLICATION

(11) **EP 4 149 176 A1**
(43) Date of publication of application: **15.03.2023**
(21) Application number: 22798225.3
(22) Date of filing: 12.05.2022
(51) Int. Cl.: H04W 52/02

(54) **DATA COMMUNICATION METHOD AND APPARATUS**

(30) Priority: 30.07.2021 CN 202110874954
(71) Applicant: Honor Device Co., Ltd., Shenzhen, Guangdong 518040 (CN)
(72) Inventor: HUANG, Wen, Shenzhen, Guangdong 518040 (CN)
(74) Representative: Gill Jennings & Every LLP
(86) International application number: PCT/CN2022/092428
(87) International publication number: WO 2023/005343

(57) **Abstract**

The embodiments of this application provide a data communication method and apparatus. The communications chip of the terminal device receives the to-be-processed data packet, obtains the to-be-identified process, and then determines whether the to-be-identified process exists in the preset filtering rule, and when the to-be-identified process exists in the filtering rule, the communications chip does not forward the to-be-processed data packet to the application processor. In the method disclosed in the embodiments of this application, when the terminal device is in a screen-off state and enters a dormant state, when receiving the data packet sent by the cloud server, the communications chip does not immediately wake up the application processor, and instead first identifies to determine whether the data packet needs to be filtered out, that is, determine whether the process of the application program to which the data packet is to be sent is restricted from data exchange with the cloud server. If the process is restricted from data exchange with the cloud server, the communications chip directly discards the data packet without waking up the application processor.

## Description

This application claims priority to Chinese Patent Application No. 202110874954.5, filed with the China National Intellectual Property Administration on July 30, 2021 and entitled "DATA COMMUNICATION METHOD AND APPARATUS", which is incorporated herein by reference in its entirety.

### TECHNICAL FIELD

This application relates to the field of communication technologies, and in particular, to a data communication method and apparatus.

### BACKGROUND

When running on a terminal device, an application program establishes a TCP connection or a UDP connection with a cloud server, to perform data exchange. When the cloud server sends a data packet to the application program on the terminal device, the data packet first reaches a communications chip, and then is forwarded by the communications chip to an application processor.

Usually, the application program corresponds to at least one process during running. When the application program exits to run in the background, the process of the application program continues to maintain data exchange with the cloud server in the background, that is, the cloud server may always send a data packet to the application program. If the terminal device is in a dormant state with the screen off, each time the communications chip sends a received data packet to the application processor, the application processor is woken up, resulting in frequent interruption of the dormant state of the terminal device. If the dormant state is frequently interrupted, power consumption of the terminal device is increased.

### SUMMARY

To avoid that when a terminal device is in a dormant state with the screen off, an application processor is frequently woken up by a data packet sent by a cloud server, this application discloses a data communication method and apparatus.

According to a first aspect, an embodiment of this application discloses a data communication method, including:
receiving, by a communications chip of a terminal device, a to-be-processed data packet, where the to-be-processed data packet is a data packet sent by a cloud server;
obtaining, by the communications chip, a to-be-identified process, where the to-be-identified process is a process corresponding to the to-be-processed data packet;
determining, by the communications chip, whether the to-be-identified process exists in a preset filtering rule, where the filtering rule includes at least one process that is restricted from communicating with the cloud server; and
in a case that the to-be-identified process exists in the filtering rule, skipping, by the communications chip, forwarding the to-be-processed data packet to an application processor of the terminal device.

In the above solution, when the terminal device is in a screen-off state and enters a dormant state, when receiving the data packet sent by the cloud server, the communications chip does not immediately wake up the application processor, and instead first identifies to determine whether the data packet needs to be filtered out, that is, determine whether the process of the application program to which the data packet is to be sent is restricted from data exchange with the cloud server. If the process is restricted from data exchange with the cloud server, the communications chip directly discards the data packet without waking up the application processor. This can effectively reduce the number of times the dormant state of the terminal device is interrupted and reduce power consumption of the terminal device.

In an implementation, the obtaining, by the communications chip, a to-be-identified process includes:
obtaining, by the communications chip, a destination port number and a protocol number of the to-be-processed data packet; and
obtaining, by the communications chip, the to-be-identified process according to the destination port number and the protocol number of the to-be-processed data packet.

In the above solution, the communications chip parses the data packet, and can accurately locate, according to the destination port number and the protocol number obtained through parsing, the process of the application program to which the data packet is to be sent, to obtain the to-be-identified process.

In an implementation, the determining, by the communications chip, whether the to-be-identified process exists in a preset filtering rule includes:
determining, by the communications chip, whether the destination port number and the protocol number of the to-be-processed data packet exist in the preset filtering rule, where the filtering rule includes multiple groups of port numbers and protocol numbers, and each group of port number and protocol number corresponds to a process that is restricted from communicating with the cloud server.

In an implementation, the method further includes:
in a case that the to-be-identified process does not exist in the filtering rule, forwarding, by the communications chip, the to-be-processed data packet to the application processor.

In the above solution, only when the to-be-identified process is allowed to perform data exchange with the cloud server and the corresponding to-be-processed data packet is allowed to pass, the communications chip forwards the data packet to the application processor for subsequent processing.

In an implementation, the method further includes:
receiving, by the communications chip, at least one target data set sent by the application processor, where each target data set includes a port number and a protocol number of a target process, and the target process is a process that is in an application program running in the background and that needs to be restricted from communicating with the cloud server; and
adding, by the communications chip, the target data set to the filtering rule.

In an implementation, the method further includes:
receiving, by the communications chip, at least one target data set sent by the application processor, where each target data set includes a port number and a protocol number of a target process, and the target process is a process that is in an application program exiting from the foreground to run in the background and that needs to be restricted from data exchange with the cloud server; and
adding, by the communications chip, the target data set to the filtering rule.

In the above solution, the communications chip pre-stores and updates the filtering rule, and it is ensured that the communications chip accurately performs a data packet filtering operation.

In an implementation, before the receiving, by the communications chip, at least one target data set sent by the application processor, the method further includes:
determining, by the application processor, whether an application program exits to run in the background;
in a case that an application program exits to run in the background, obtaining, by the application processor, the target process;
obtaining, by the application processor, the target data set according to the target process, where the target data set includes the port number and the protocol number of the target process; and
sending, by the application processor, the target data set to the communications chip.

In the above solution, once the application program runs in the background, the application processor determines whether to filter out all processes of the application program. Once it is determined that all or some processes of the application program need to be filtered out, target data sets corresponding to these processes are sent to the communications chip, so that the communications chip adds the target data sets to the filtering rule to update the filtering rule, and performs, according to the updated filtering rule, a filtering operation on the data packet corresponding to the target process. Subsequently, once a data packet sent by the cloud server is received, the data packet is directly discarded and is not forwarded to the application processor. In this way, when the terminal device enters the dormant state with the screen off, this can effectively reduce the number of times the dormant state of the terminal device is interrupted and reduce power consumption of the terminal device.

In an implementation, the obtaining, by the application processor, the target process includes:
determining, by the application processor, whether the application program exiting to run in the background enters a frozen state;
in a case that it is determined that the application program exiting to run in the background enters a frozen state, determining, by the application processor, whether a target data packet is received, where the target data packet is a data packet sent by the cloud server for the application program entering the frozen state; and
in a case that it is determined that the target data packet is received, obtaining, by the application processor, the target process.

In the above solution, the application processor may monitor only the application program in a frozen state, set a process that still has an active behavior as the target process, and then obtain a target data set of each target process and add the target data set to the filtering rule of the communications chip. In this way, a number of port numbers and protocol numbers to be stored in the filtering rule can be reduced, and the data packet filtering efficiency of the communications chip is effectively improved while ensuring that the data packet of the application program in a frozen state is preferentially filtered out.

In an implementation, the obtaining, by the application processor, the target process includes:
obtaining, by the application processor, the destination port number of the target data packet; and
obtaining, by the application processor, the target process according to the destination port number of the target data packet.

In an implementation, the obtaining, by the application processor, the target data set according to the target process includes:
obtaining, by the application processor, socket information according to the target process, where the socket information includes a port number and a protocol number of the target process; and
obtaining, by the application processor, the target data set according to the socket information.

In the above solution, a source port number and the protocol number of the target process may be obtained according to the socket information of the process, and then the target data set of each target process may be obtained.

In an implementation, the communications chip includes a micro control chip and a data transceiver chip; and
the data transceiver chip includes a modem chip and/or a wireless fidelity chip.

In the above solution, each time the modem chip or the wireless fidelity chip receives a data packet, the modem chip or the wireless fidelity chip forwards the data packet to the micro control chip, and the micro control chip takes over the data packet received by the modem chip or the wireless fidelity chip, and performs the data packet filtering operation, which can improve data packet filtering efficiency.

According to a second aspect, an embodiment of this application discloses a data communications chip, including a transceiver circuit and a processing circuit;
where the transceiver circuit is configured to:
receive a to-be-processed data packet, where the to-be-processed data packet is a data packet sent by a cloud server; and
the processing circuit is configured to:
obtain a to-be-identified process, where the to-be-identified process is a process corresponding to the to-be-processed data packet;
determine whether the to-be-identified process exists in a preset filtering rule, where the filtering rule includes at least one process that is restricted from communicating with the cloud server; and
in a case that the to-be-identified process exists in the filtering rule, skip forwarding the to-be-processed data packet to an application processor.

In an implementation, when obtaining the to-be-identified process, the processing circuit is configured to:
obtain a destination port number and a protocol number of the to-be-processed data packet; and
obtain the to-be-identified process according to the destination port number and the protocol number of the to-be-processed data packet.

In an implementation, when determining whether the to-be-identified process exists in the preset filtering rule, the processing circuit is configured to:
determine whether the destination port number and the protocol number of the to-be-processed data packet exist in the preset filtering rule, where the filtering rule includes multiple groups of port numbers and protocol numbers, and each group of port number and protocol number corresponds to a process that is restricted from communicating with the cloud server.

In an implementation, the processing circuit is further configured to:
in a case that the to-be-identified process does not exist in the filtering rule, forward the to-be-processed data packet to the application processor.

In an implementation, the processing circuit is further configured to:
receive at least one target data set sent by the application processor, where each target data set includes a port number and a protocol number of a target process, and the target process is a process that is in an application program running in the background and that needs to be restricted from communicating with the cloud server; and
add the target data set to the filtering rule.

In an implementation, the processing circuit is further configured to:
receive at least one target data set sent by the application processor, where each target data set includes a port number and a protocol number of a target process, and the target process is a process that is in an application program exiting from the foreground to run in the background and that needs to be restricted from communicating with the cloud server; and
add the target data set to the filtering rule.

In an implementation, the processing circuit is a micro control chip.

According to a third aspect, an embodiment of this application discloses a data communication apparatus, including the data communications chip according to the second aspect and the application processor; where
the application processor is configured to:
before the processing circuit receives the at least one target data set sent by the application processor, determine whether an application program exits to run in the background;
in a case that an application program exits to run in the background, obtain the target process;
obtain the target data set according to the target process, where the target data set includes the port number and the protocol number of the target process; and
send the target data set to the processing circuit.

In an implementation, when obtaining the target process, the application processor is configured to:
determine whether the application program exiting to run in the background enters a frozen state;
in a case that it is determined that the application program exiting to run in the background enters a frozen state, determine whether a target data packet is received, where the target data packet is a data packet sent by the cloud server for the application program entering the frozen state; and
in a case that it is determined that the target data packet is received, obtain the target process.

In an implementation, when obtaining the target process, the application processor is configured to:
obtain the destination port number of the target data packet; and
obtain the target process according to the destination port number of the target data packet.

In an implementation, when obtaining the target data set according to the target process, the application processor is configured to:
obtain socket information according to the target process, where the socket information includes a port number and a protocol number of the target process; and
obtain the target data set according to the socket information.

According to a fourth aspect, an embodiment of this application discloses a terminal device, including the data communication apparatus according to the third aspect.

According to a fifth aspect, an embodiment of this application discloses a terminal device, including:
at least one data communication apparatus according to the third aspect and a memory; where
the memory is configured to store program instructions; and
the data communication apparatus is configured to call and execute the program instructions stored in the memory, so that the terminal device executes the data communication method according to the first aspect.

According to a sixth aspect, an embodiment of this application discloses a terminal device, including:
at least one processor and a memory; where
the memory is configured to store program instructions; and
the processor is configured to call and execute the program instructions stored in the memory, so that the terminal device executes the data communication method according to the first aspect.

According to a seventh aspect, an embodiment of this application discloses a computer-readable storage medium, storing instructions, where when the computer-readable storage medium runs on a computer, the computer is caused to execute the data communication method according to the first aspect.

According to an eighth aspect, an embodiment of this application provides a computer program product including instructions, where when the computer program product runs on an electronic device, the electronic device is caused to execute the data communication method according to the first aspect.

The embodiments of this application provide a data communication method and apparatus. The communications chip of the terminal device receives the to-be-processed data packet, obtains the to-be-identified process, and then determines whether the to-be-identified process exists in the preset filtering rule, and when the to-be-identified process exists in the filtering rule, the communications chip does not forward the to-be-processed data packet to the application processor. In the method disclosed in the embodiments of this application, when the terminal device is in a screen-off state and enters a dormant state, when receiving the data packet sent by the cloud server, the communications chip does not immediately wake up the application processor, and instead first identifies to determine whether the data packet needs to be filtered out, that is, determine whether the process of the application program to which the data packet is to be sent is restricted from data exchange with the cloud server. If the process is restricted from data exchange with the cloud server, the communications chip directly discards the data packet without waking up the application processor. This can effectively reduce the number of times the dormant state of the terminal device is interrupted and reduce power consumption of the terminal device.

### BRIEF DESCRIPTION OF DRAWING

FIG. 1 is a schematic structural diagram of a terminal device according to an embodiment of this application;
FIG. 2 is a schematic structural diagram of a terminal device and a cloud server according to an embodiment of this application;
FIG. 3 is a schematic structural diagram of a communications chip according to an embodiment of this application;
FIG. 4 is another schematic structural diagram of a communications chip according to an embodiment of this application;
FIG. 5 is a schematic diagram of a working procedure of a data communication method according to an embodiment of this application;
FIG. 6 is a schematic diagram of a working procedure of a filtering rule generation method according to an embodiment of this application;
FIG. 7 is a schematic diagram of a working procedure of another filtering rule generation method according to an embodiment of this application;
FIG. 8 is a schematic structural diagram of a data communications chip according to an embodiment of this application;
FIG. 9 is a schematic structural diagram of a data communication apparatus according to an embodiment of this application;
FIG. 10 is a schematic structural diagram of a terminal device according to an embodiment of this application;
FIG. 11 is a schematic structural diagram of another data communications chip according to an embodiment of this application;
FIG. 12 is a schematic structural diagram of another data communication apparatus according to an embodiment of this application; and
FIG. 13 is a schematic structural diagram of another terminal device according to an embodiment of this application.

### DESCRIPTION OF EMBODIMENTS

The following describes the technical solutions in the embodiments of this application with reference to the accompanying drawings in the embodiments of this application.

Terms used in the following embodiments are only intended to describe particular embodiments, and are not intended to limit this application. As used in this specification and the claims of this application, a singular expression form, "one", "a", "the", "foregoing", "the", or "this", is intended to also include "one or more" expression form, unless clearly indicated to the contrary in the context. It should be further understood that, in the following embodiments of this application, "at least one" and "one or more" means one, two or more. The term "and/or" describes an association between associated objects and represents that three relationships may exist. For example, A and/or B may indicate that only A exists, both A and B exist, and only B exists, where A and B may be singular or plural. The character "/" generally indicates an "or" relationship between the associated objects.

The reference to "one embodiment" or "some embodiments" described in this specification means that a specific characteristic, structure or feature described in combination with this embodiment is included in one or more embodiments of this application. Therefore, the statements "in one embodiment", "in some embodiments", "in some other embodiments", "in other embodiments", and the like in the differences in this specification do not necessarily refer to the same embodiment, but mean that "one or more but not all embodiments", unless otherwise specially emphasized in other ways. The terms "include", "comprise", "have" and their variations mean "including but not limited to", unless otherwise specially emphasized in other ways.

An embodiment of this application provides a data communication method. The method may be applied to a terminal device, which may be a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a handheld computer, a netbook, a personal digital assistant (personal digital assistant, PDA), a smart wearable device, a virtual reality device and the like. This is not limited in the embodiments of this application.

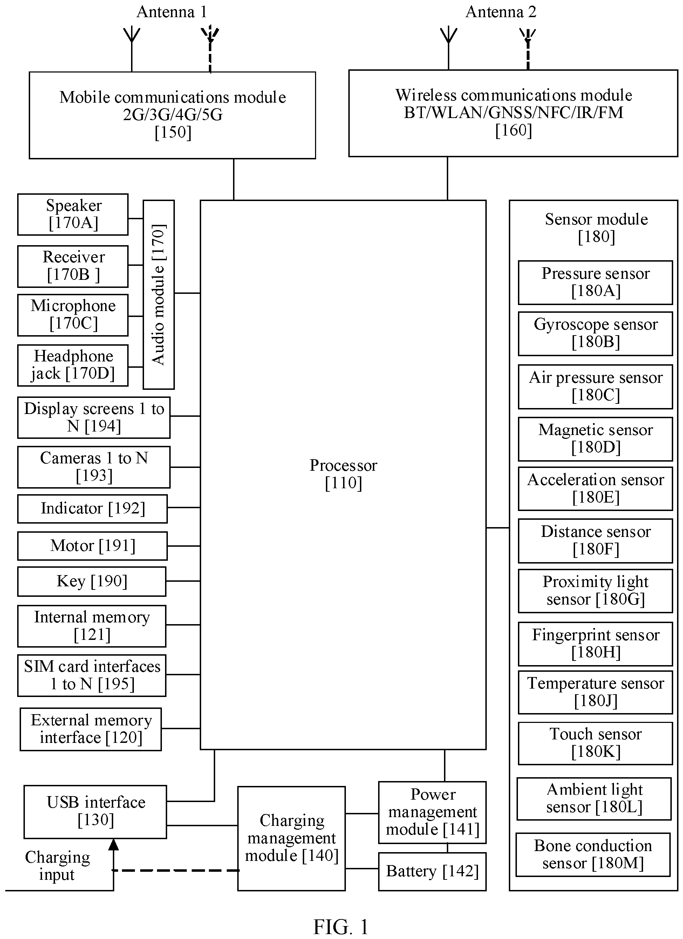

FIG. 1 is a schematic structural diagram of a terminal device.

The terminal device may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the schematic structure in the embodiments of this application constitutes no specific limitation on the terminal device. In some other embodiments of this application, the terminal device may include more or fewer components than those shown in the figure, or some components may be combined, or some components may be split, or a different component deployment may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operating control signal according to an instruction operation code and a sequence signal, to complete control of fetching and executing an instruction.

A memory may be further disposed in the processor 110, and is configured to store instructions and data. In some embodiments, the memory in the processor 110 is a cache. The memory may store an instruction or data that has just been used or cyclically used by the processor 110. If the processor 110 needs to use the instruction or the data again, the processor may directly invoke the instruction or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation ((pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

A wireless communication function of the terminal device may be implemented by using the antenna 1, the antenna 2, the mobile communications module 150, the wireless communications module 160, the modem processor, the baseband processor, and the like.

The antenna 1 and the antenna 2 are configured to transmit or receive an electromagnetic wave signal Each antenna in the terminal device may be configured to cover one or more communication frequency bands. Different antennas may also be multiplexed to improve utilization of the antennas. For example, the antenna 1 may be multiplexed as a diversity antenna of a wireless local area network. In some other embodiments, the antenna may be used in combination with a tuning switch.

The mobile communication module 150 may provide a solution to wireless communication such 2G/3G/4G/5G applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Next, the demodulator transmits the demodulated low-frequency baseband signal to the baseband processor for processing. The low-frequency baseband signal is processed by the baseband processor and then transmitted to an AP. The AP outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and the modem processor and the mobile communication module 150 or another functional module may be disposed in the same component.

The wireless communication module 160 may provide a solution for wireless communication including a wireless local area network (wireless local area network, WLAN) (such as a wireless fidelity (wireless fidelity, Wi-Fi) network), Bluetooth (bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the terminal device. The wireless communications module 160 may be one or more components into which at least one communication processing module is integrated. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 of the terminal device are coupled, and the antenna 2 and the wireless communications module 160 of the electronic device are coupled, so that the terminal device can communicate with a network and another device by using a wireless communications technology.

To clarify the solutions provided in this application, the solutions provided in this application are described below through method embodiments with reference to the accompanying drawings.

In the solutions provided in this application, the communications chip is responsible for sending and receiving various data and performing data communication with the cloud server. The communications chip is configured to perform communication for the mobile communications module 150 and/or the wireless communications module 160. In some implementations, a modem processor (Modem chip) may be used as the mobile communications module 150, and a wireless fidelity (wireless fidelity, WiFi) chip may be used as the wireless communications module 160. If the terminal device uses a mobile communication network, a data packet sent by the cloud server reaches the modem chip. If the terminal device uses a short-range wireless communication network, the data packet sent by the cloud server reaches the WiFi chip.

The application processor is responsible for executing all application programs in the terminal device, and is located in the processor 110. By monitoring a life cycle of an application program, the application processor may determine whether the application program runs in the foreground or background, and determine each running state switched by the application program.

The application processor includes an application background management module and a kernel layer. When the application program exits to run in the background, the application program is taken over by the application background management module. The kernel layer provides an IP/NetFilter firewall. The IP/NetFliter firewall is a NetFilter-based IP data packet filtering firewall that may monitor a data packet sent by the cloud server and then determine to filter out (discard) the data packet or allow the data packet to pass.

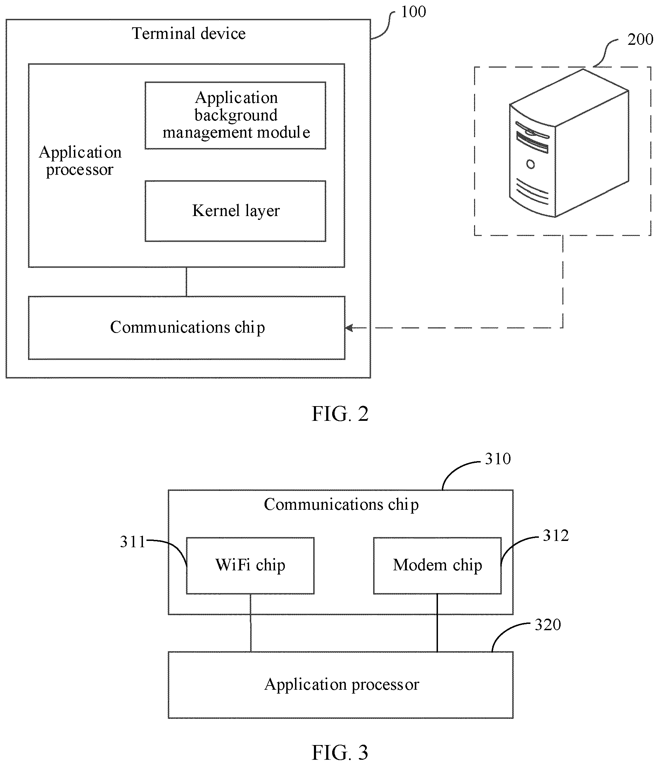

Referring to FIG. 2, currently, the data packet sent by the cloud server 200 to the terminal device 100 is received by the communications chip in the terminal device 100, and then the communications chip forwards, to the application processor, the data packet sent by the cloud server 200. Then, the application background management module receives the data packet, and determines, based on an IP/NetFilter firewall technology provided by the kernel layer, whether the data packet is allowed to pass (to be sent to the application program). If the data packet is not allowed to pass, the application background management module discards the data packet, and if the data packet is allowed to pass, the application background management module sends the data packet to the corresponding application program.

The terminal device is generally in three states: first, the terminal device is in a screen-on state and works normally; second, the terminal device is in a screen-off state, but has not entered a dormant state; and third, the terminal device is in a screen-off state and has entered a dormant state. The processor 110 may monitor a current state of the terminal device in real time.

A life cycle of an application program includes the following five states: 1. not running (non-running state), where the application program does not run or has been terminated; 2. inactive (foreground inactive state), where the application program is entering a foreground state, but cannot perform event processing; 3. active (foreground active state), where the application program enters a foreground running state and may perform event processing; 4. background (background state), where the application program may still execute code after running in the background; and 5. suspended (suspended state), where a suspended application program enters a "frozen" state and cannot execute code.

By monitoring a life cycle of an application program, the application background management module may determine whether the application program currently runs in the foreground or background, and determine each state switched by the application program.

When the terminal device is in the third state, that is, the terminal device is in a screen-off state and has entered a dormant state, all components including the application processor in the terminal device are in a low power consumption state, and all application programs also enter a dormant state in the background and cannot send a data packet to the cloud server, but the cloud server continues to send a data packet. When a cloud server corresponding to an application program sends a data packet, the communications chip receives the data packet and then wakes up the application processor for processing. As a result, the terminal device wakes up from the dormant state, and other application programs also switch from a dormant state to an active state, which increases the power consumption of the terminal device.

When an application program runs, one or more processes may be started, and each process establishes a socket connection with a cloud server. The socket connection is established according to a TCP protocol or a UDP protocol. Socket (socket) defines a five-tuple of two endpoints of a connection: source IP address, source port number, destination IP address, destination port number, and protocol number. The socket can uniquely identify a TCP connection or a UDP connection, and a path of sending and receiving a data packet can be accurately located. For example, when receiving a data packet, the communications chip may determine, according to a source IP address, a cloud server that sends the data packet, and determine, according to a destination port number and a protocol number, a process that receives the data packet. When sending a data packet, the communications chip may determine, according to a source port number and a protocol number, a process that sends the data packet, and determine, according to a destination IP address and a destination port number, a cloud server that receives the data packet.

The TCP protocol is transmission control protocol and is connection-oriented. For a connection established according to the TCP protocol, when the application program runs in the background, the connection can be actively cut off. However, even after the connection is cut off, the cloud server still sends a data packet to the application program, for example, the cloud server performs an abnormal or malicious behavior.

The UDP protocol is user datagram protocol. The UDP protocol is connectionless. Therefore, when an application program runs in the background, a connection cannot be cut off and the cloud server continues to send a data packet to the application program, especially the cloud server continuously sends a UDP data packet to the terminal device when performing an abnormal or malicious behavior. If the terminal device is in the third state, the application processor is frequently woken up, which increases the power consumption of the terminal device.

To avoid that when a terminal device is in a dormant state with the screen off, an application processor is frequently woken up by a data packet sent by a cloud server, this application discloses a data communication method. In the method, a communications chip performs a data packet filtering operation.

In an implementation, referring to FIG. 3, a communications chip 310 includes a data transceiver chip, and the data transceiver chip includes a wireless fidelity (wireless fidelity, WiFi) chip 311 and/or a modem (Modem chip) 312. In some implementations, the data transceiver chip may only include the WiFi chip 311. In some other implementations, the data transceiver chip may only include the modem chip 312. In some other implementations, the data transceiver chip may include the WiFi chip 311 and the modem chip 312.

If the terminal device uses a WiFi network, the data transceiver chip needs to include the WiFi chip 311, the data packet sent by the cloud server reaches the WiFi chip 311, and the WiFi chip 311 performs the data packet filtering operation. If the terminal device uses a mobile communication network, the data transceiver chip needs to include the modem chip 312, the data packet sent by the cloud server reaches the modem chip 312, and the modem chip 312 performs the data packet filtering operation. In this implementation, the WiFi chip 311 and the modem chip 312 are respectively connected to the application processor.

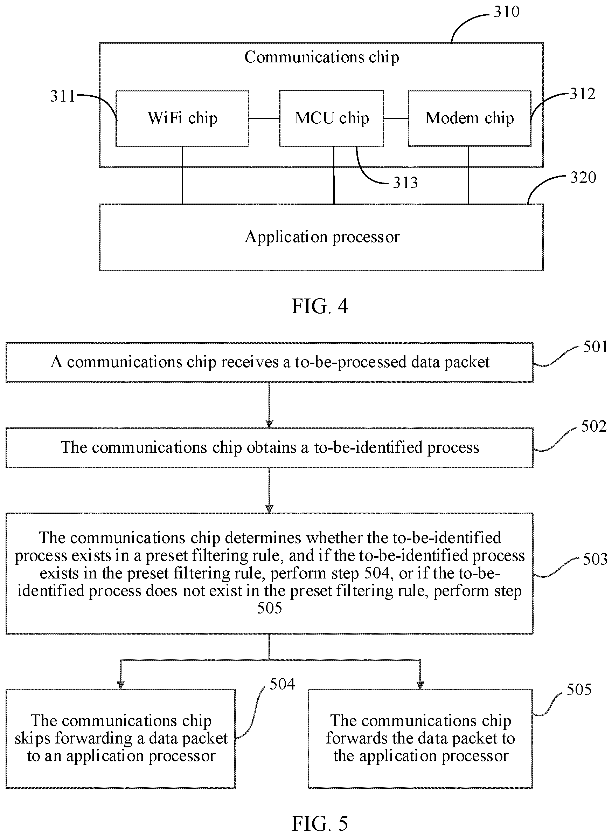

In another implementation, referring to FIG. 4, the communications chip 310 not only includes the data transceiver chip, but also may be provided with an independent microcontroller unit (Microcontroller Unit, MCU) chip 313. Each time the WiFi chip 311 or the modem chip 312 receives a data packet, the WiFi chip 311 or the modem chip 312 forwards the data packet to the MCU chip 313, and the MCU chip 313 takes over the data packet received by the WiFi chip 311 or the modem chip 312 and performs the data packet filtering operation, so that data packet filtering efficiency can be improved. In this implementation, the WiFi chip 311 and the modem chip 312 are respectively connected to the MCU chip 313, and the MCU chip 313 is connected to the application processor 320. In addition, to perform other functions, the WiFi chip 311 and the modem chip 312 may also be respectively connected to the application processor 320.

The communications chip may pre-store a filtering rule. The filtering rule includes multiple groups of port numbers and protocol numbers. Each group of port number and protocol number corresponds to an application program process that is restricted from data exchange with the cloud server.

When performing the filtering operation on the data packet sent by the cloud server, in some embodiments, if the filtering operation is performed by the WiFi chip or the modem chip, the WiFi chip and the modem chip may pre-store the filtering rule respectively. In some other embodiments, if the filtering operation is performed by the MCU chip, the MCU chip may pre-store the filtering rule.

Referring to the working flowchart shown in FIG. 5, this application discloses a data communication method, including:
Step 501: A communications chip of a terminal device receives a to-be-processed data packet.

The to-be-processed data packet is a data packet sent by a cloud server.

Step 502: The communications chip obtains a to-be-identified process.

The to-be-identified process is a process corresponding to the to-be-processed data packet.

Exemplarily, the data packet carries five-tuple information, that is, a source IP address, a source port number, a destination IP address, a destination port number, and a protocol number. Both the source IP address and the source port number correspond to the cloud server that sends the data packet. Both the destination IP address and the destination port number correspond to the process of the application program that receives the data packet. The protocol number may be used to specify whether the connection between the cloud server and the process is established according to the TCP protocol or the UDP protocol.

The communications chip may parse the to-be-processed data packet to obtain the destination port number and the protocol number of the data packet, and according to the destination port number and the protocol number of the to-be-processed data packet, can accurately locate the process of the application program to which the data packet is to be sent, to obtain the to-be-identified process.

Step 503: The communications chip determines whether the to-be-identified process exists in a preset filtering rule, where the filtering rule includes at least one process that is restricted from communicating with the cloud server.

In an implementation, the filtering rule includes multiple groups of port numbers and protocol numbers. Each group of port number and protocol number corresponds to a process that is restricted from data exchange with the cloud server.

The communications chip may determine whether the destination port number and the protocol number of the to-be-processed data packet exist in the filtering rule, and then determine whether the to-be-identified process exists in the preset filtering rule.

If the communications chip finds the destination port number and the protocol number of the to-be-processed data packet in the filtering rule, it means that the to-be-identified process exists in the filtering rule and the to-be-identified process is a process that is restricted from data exchange with the cloud server. In this case, step 504 is performed.

If the communications chip does not find the destination port number and the protocol number of the to-be-processed data packet in the filtering rule, it means that the to-be-identified process does not exist in the filtering rule and the to-be-identified process is allowed to perform data exchange with the cloud server. In this case, step 505 is performed.

Step 504: In a case that the destination port number and the protocol number of the to-be-processed data packet are found in the filtering rule, that is, in a case that the to-be-identified process exists in the filtering rule, the communications chip skips forwarding the data packet to an application processor of the terminal device.

If the to-be-identified process is restricted from communicating with the cloud server, the to-be-processed data packet corresponding to the to-be-identified process is not allowed to pass, and the communications chip directly discards (that is, filters out) the data packet and no longer sends the data packet to the application processor for processing, to avoid waking up the application processor.

Step 505: In a case that the destination port number and the protocol number of the to-be-processed data packet are not found in the filtering rule, that is, in a case that the to-be-identified process does not exist in the filtering rule, the communications chip forwards the to-be-processed data packet to an application processor of the terminal device.

For example, referring to Table 1 below, it is assumed that the filtering rule stored in the communications chip includes five groups of port numbers and protocol numbers (in a practical application, the communications chip may include more groups, such as hundreds or even thousands of groups, which is not limited in this application). A first group is a port number 1 and a protocol number 1, corresponding to a process 1, a second group is a port number 2 and a protocol number 1, corresponding to a process 2, a third group is a port number 3 and a protocol number 2, corresponding to a process 3, a fourth group is a port number 4 and a protocol number 2, corresponding to a process 4, and a fifth group is a port number 5 and a protocol number 3, corresponding to a process 5. The process 1 to the process 5 are all processes that are restricted from data exchange with the cloud server. If the destination port number and the protocol number of the to-be-processed data packet are the port number 2 and the protocol number 1 respectively, and the communications chip obtains the second group through matching after searching in the filtering rule, it means that the to-be-identified process corresponding to the to-be-processed data packet exists in the filtering rule. In this case, the communications chip can directly filter out the to-be-processed data packet. If the destination port number and the protocol number of the to-be-processed data packet are the port number 6 and the protocol number 6 respectively, and the communications chip obtains no group through matching after searching in the filtering rule, it means that the to-be-identified process corresponding to the to-be-processed data packet does not exist in the filtering rule. In this case, the communications chip may not perform a filtering operation on the to-be-processed data packet.

**Table 1 Filtering rule**

| Filtering rule | | |
|---|---|---|
| Group number | Port number | Protocol number |
| 1 | port number 1 | protocol number 1 |
| 2 | port number 2 | protocol number 1 |
| 3 | port number 3 | protocol number 2 |
| 4 | port number 4 | protocol number 2 |
| 5 | port number 5 | protocol number 3 |

When the to-be-identified process is allowed to communicate with the cloud server, the to-be-processed data packet corresponding to the to-be-identified process is allowed to pass. Only in this case, the communications chip forwards the data packet to the application processor for subsequent processing.

The above procedure is performed when the terminal device is in a screen-off state and enters a dormant state, so that when receiving the data packet sent by the cloud server, the communications chip does not immediately wake up the application processor, and instead first identifies to determine whether the data packet needs to be filtered out, that is, determine whether the process of the application program to which the data packet is to be sent is restricted from communication with the cloud server. If the process is restricted from communication with the cloud server, the communications chip directly discards the data packet without waking up the application processor. This can effectively reduce the number of times the dormant state of the terminal device is interrupted and reduce power consumption of the terminal device.

When the terminal device is in a screen-on state and works normally, or when the terminal device is in a screen-off state, but has not entered a dormant state, the data packet filtering operation performed by the communications chip can also effectively reduce the power consumption of the terminal device. Although the application processor is not in a dormant state and may perform a data packet filtering operation in these two states, because the application processor is a processor CPU, generated power consumption is higher than that generated in data packet filtering performed by the communications chip. Therefore, regardless of the state of the terminal device, the data packet filtering operation performed by the communications chip can effectively reduce the power consumption.

In an implementation, this embodiment mainly functions to enable the communications chip to not immediately forward the data packet to the application processor after receiving the data packet sent by the cloud server. Instead, the communications chip first identifies the data packet, and directly performs the filtering operation when the data packet needs to be filtered out, to avoid frequently waking up the application processor when the terminal device is in the dormant state with the screen off. Therefore, the filtering rule is equivalent to a blacklist mechanism. The filtering rule includes an application program process that is not allowed to perform data exchange with the cloud server. As long as the destination port number and the protocol number corresponding to the data packet received by the communications chip may be found in the filtering rule, the data packet is immediately discarded to avoid waking up the application processor for processing.

In another implementation, a whitelist mechanism may be added to the filtering rule to store port numbers and protocol numbers corresponding to important processes of application programs. These processes are allowed to perform data exchange with the cloud server. Once the communications chip receives data packets corresponding to these processes, the communications chip preferentially forwards the data packets to the application processor for processing.

For example, referring to Table 2 below, it is assumed that the filtering rule stored in the communications chip is a whitelist mechanism and includes four groups of port numbers and protocol numbers (in a practical application, the communications chip may include more groups, such as hundreds or even thousands of groups). A first group is a port number 7 and a protocol number 1, corresponding to a process 7, a second group is a port number 8 and a protocol number 1, corresponding to a process 8, a third group is a port number 9 and a protocol number 3, corresponding to a process 9, and a fourth group is a port number 10 and a protocol number 2, corresponding to a process 10. The process 7 to the process 10 are all important processes that are allowed to perform data exchange with the cloud server. If the destination port number and the protocol number of the to-be-processed data packet are the port number 7 and the protocol number 1 respectively, and the communications chip obtains the first group through matching after searching in the filtering rule, it means that the to-be-identified process corresponding to the to-be-processed data packet exists in the filtering rule. In this case, the communications chip may preferentially forward the to-be-processed data packet to the application processor for processing.

**Table 2 Filtering rule (whitelist mechanism)**

| Filtering rule (whitelist mechanism) | | |
|---|---|---|
| Group number | Port number | Protocol number |
| 1 | port number 7 | protocol number 1 |
| 2 | port number 8 | protocol number 1 |
| 3 | port number 9 | protocol number 3 |
| 4 | port number 10 | protocol number 2 |

In the data communication method disclosed in this embodiment, the communications chip may also perform the following operation to pre-store and update the filtering rule, and ensure the accuracy of the data packet filtering operation performed by the communications chip:
receiving, by the communications chip, at least one target data set sent by the application processor of the terminal device, and adding the target data set to the filtering rule, where each target data set includes a port number and a protocol number of a target process.

The target process is a process that is in an application program running in the background and that needs to be restricted from communicating with the cloud server. Alternatively, the target process is a process that is in an application program exiting from the foreground to run in the background and that needs to be restricted from communicating with the cloud server. In a practical application, the terminal device includes some processes that switch from a foreground running state to a background running state, and the terminal device also include some processes that always run in the background and these processes do not run in the foreground and have no service that may be sensed by a user. The data communication method disclosed in this embodiment is not only applicable to processes that switch to run in the background from the foreground, but also applicable to processes that always run only in the background.

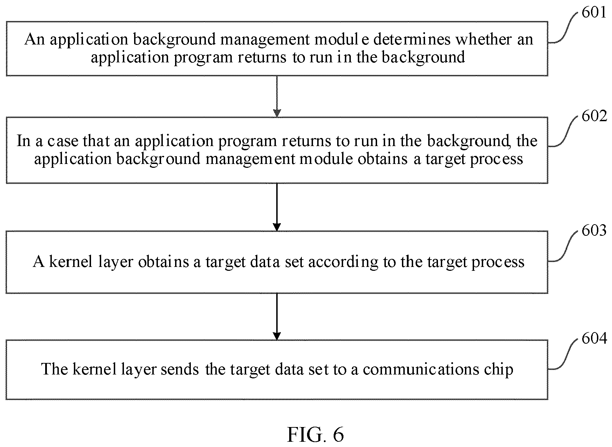

To pre-store and update the filtering rule, before the communications chip receives the at least one target data set sent by the application processor of the terminal device and adds the target data set to the filtering rule, the data communication method disclosed in the embodiments of this application also includes a filtering rule generation method. The filtering rule generation method is mainly applied to the application processor of the terminal device. The application processor includes an application background management module and a kernel layer. Referring to FIG. 6, the method includes:
Step 601: The application background management module determines whether an application program exits to run in the background.

In actual operation, if the terminal device is a device such as a mobile phone or a tablet computer, when the application program is running, a user may press the HOME key to enable the application program to exit to run in the background. If the terminal device is a device such as a computer, when the application program is running, a user may click on the minimize icon to enable the application program to exit to run in the background.

By monitoring a life cycle of an application program, the application background management module may determine whether the application program runs in the foreground or background, and determine each state switched by the application program.

Step 602: In a case that an application program exits to run in the background, the application background management module obtains a target process.

The target process is a process that is in an application program exiting to run in the background and that needs to be restricted from data exchange with the cloud server. The target process is one or more processes.

Exemplarily, a specific filtering mechanism may be obtained based on the IP/NetFilter firewall technology provided by the kernel layer. Once the application background management module detects that an application program exits to run in the background, the application background management module may determine, based on the IP/NetFilter firewall technology, whether each process of the application program is restricted from performing data interaction with the cloud server, and then obtain all processes that are restricted from data exchange with the cloud server, to obtain the target process.

When an application program runs, one or more processes may be started. Each application program corresponds to an identification ID (UID for short), and each process also corresponds to an identification ID (PID for short). The UID is an identifier of the application program, and the PID is an identifier of the process. An application program may include multiple processes at runtime, and each process has a unique PID. When the application program exits to run in the background, all processes may be restricted, or only some processes may be restricted, or all processes may not be restricted.

In an implementation, if detecting that the application program exits to run in the background, the application background management module obtains a restriction level corresponding to the application program. The restriction level includes a UID level or a PID level. If the restriction level is the UID level, it means that all processes of the application program need to be restricted. In this case, it may be determined that all processes are target processes. If the restriction level is the PID level, it means that some processes of the application program need to be restricted. In this case, only some processes are target processes.

The obtaining, by the application background management module, the restriction level corresponding to the application program is equivalent to generating a corresponding filtering command for the application program. If the restriction level is the UID level, a filtering command is generated for all processes of the application program, and a specific form of the filtering command may be the UID of the application program. If the restriction level is the PID level, the filtering command is generated for some processes of the application program, and a specific form of the filtering command may be PIDs of some processes of the application program. Each time it is detected that an application program exits to run in the background, the application background management module obtains the target process of the application program, and then generates a corresponding filtering command.

For example, when a game application program exits to run in the background, all processes are not allowed to perform data interaction with the cloud server, to prevent the power consumption of the terminal device from increasing. Then, for the game application program, the restriction level is the UID level, and the application background management module uses all processes of the application program as target processes and generates a filtering command. The filtering command may be the UID of the game application program.

For another example, for a chat application program, if a user clicks on a news link, this is equivalent to that the chat application program starts two processes. Each process establishes a connection with a respective cloud server. One process is used to send and receive messages in real time, and the other process is used to obtain news data. When the application program exits to run in the background, the process for sending and receiving messages is allowed to continue to maintain data interaction with the cloud server, to ensure that a user may receive a message in real time, while the process for obtaining news data is not allowed to perform data exchange with the cloud server, to prevent the power consumption of the terminal device from increasing. Then, for the chat application program, the restriction level is the PID level, and the application background management module uses the process for obtaining news data as the target process and generates a filtering command. The filtering command may be the PID of the process for obtaining news data.

It should be noted that if all processes of the application program are not restricted, it means that the application program belongs to neither the UID level nor the PID level, and there is no need to perform a filtering operation on the application program. Therefore, there is no need to generate a filtering command and perform subsequent steps for the application program.

Step 603: A kernel layer obtains a target data group according to the target process.

The target data set may include the port number and the protocol number of the target process.

Before the kernel layer obtains the target data set of each target process, the application background management module needs to first send the obtained target process to the kernel layer.

In an implementation, if a restriction level of an application program is a UID level, the application background management module can directly send a UID of the application program to the kernel layer, and the kernel layer may obtain all processes of the application program after receiving the UID of the application program. If a restriction level of an application program is a PID level, after determining a target process corresponding to the application program, the application background management module sends a PID of the target process to the kernel layer.

After receiving the target process sent by the application background management module, the kernel layer may obtain a port number of the target process and a connection established between the target process and the cloud server. A protocol number of the connection is obtained by parsing the connection. The obtained port number and protocol number are used as the target data set of the target process.

In an implementation, if the restriction level of the application program is the UID level, according to a received UID of the application program, the kernel layer may obtain all the processes of the application program and socket information of a connection established between each process and the cloud server.

The socket information defines a five-tuple of two endpoints of a connection: source IP address, source port number, destination IP address, destination port number, and protocol number. Both the source IP address and the source port number correspond to the process of the application program, and both the destination IP address and the destination port number correspond to the cloud server. In addition, the socket information also identifies whether the connection between the process and the cloud server is established according to a TCP protocol or a UDP protocol. Therefore, the source port number and the protocol number of the process may be obtained according to the socket information, and then the target data set of each target process may be obtained.

In another implementation, if the restriction level of the application program is the PID level, only some processes are target processes, and according to a received PID of each target process, the kernel layer obtains socket information of a connection established between each target process and the cloud server, and then obtains the target data set of each target process.

Step 604: The kernel layer sends the target data group to a communications chip.

Once the kernel layer sends the target data set of the target process to the communications chip, the communications chip adds the target data set to the filtering rule to update the filtering rule, and performs, according to the updated filtering rule, a filtering operation on the data packet corresponding to the target process. Once a data packet sent by the cloud server is received, the data packet is directly discarded and is not forwarded to the application processor.

The filtering rule generation method (step 601 to step 604) is described below with reference to examples.

It is assumed that two processes are started when an application program runs. Each process establishes a socket connection with a respective cloud server, one process (PID 1) corresponds to a socket 1, and the other process (PID 2) corresponds to a socket 2. In this case, the socket 1 defines: a source IP address 1, a source port number 1, a destination IP address 1, a destination port number 1, and a protocol number 1, and the socket 2 defines: a source IP address 2, a source port number 2, a destination IP address 2, a destination port number 2, and a protocol number 2. The source port number 1 is a port number of the process (PID 1), and the source port number 2 is a port number of the process (PID 2).

Once the application background management module detects that the application program exits to run in the background, the application background management module obtains a restriction level of the application program.

If the restriction level of the application program is a PID level, the application background management module directly obtains a PID of the application program, and sends the PID of the application program to the kernel layer. The kernel layer obtains, according to the received PID of the application program, connections established in all processes of the application program, including the socket 1 and the socket 2. Then, the kernel layer obtains the source port number 1 and the protocol number 1 defined by the socket 1, and obtains the source port number 2 and the protocol number 2 defined by the socket 2. Finally, the kernel layer sends the source port number 1 and the protocol number 1 to the communications chip as a target data set of PID 1, and sends the source port number 2 and the protocol number 2 to the communications chip as a target data set of PID 2.

If the restriction level of the application program is a PID level, and assuming that the process (PID 2) is restricted from data interaction with the cloud server, the application background management module determines a process corresponding to PID 2 as the target process, and then sends the PID (that is, PID 2) of the target process to the kernel layer. The kernel layer obtains the socket 2 according to PID 2, and obtains the source port number 2 and the protocol number 2 defined by the socket 2. Finally, the kernel layer sends the source port number 2 and the protocol number 2 to the communications chip as the target data set of PID 2.

In consideration of the performance and the memory of the communications chip, in some application scenarios, an excessively large number of port numbers and protocol numbers cannot be stored in the filtering rule. Otherwise, the data packet filtering efficiency is affected. Therefore, in this embodiment, only an application program in a frozen state (that is, an application program whose life cycle enters the fifth state) is monitored, and port numbers and protocol numbers of some processes corresponding to the application program are stored in the filtering rule.

In some cases, the application background management module may determine whether the application program running in the background enters a frozen state. Specifically, after the application program runs in the background, the application background management module determines whether the application program may be frozen. The basis for the determining is whether the application program has a service process that may be sensed by a user. If the application program has no service process that may be sensed by a user, the application program may be frozen. The service process that may be sensed by a user includes but is not limited to: navigation, music, receiving a chat message, exercise step counting, data download, and the like. A freezing method is to restrict all active behaviors of all processes after the application program runs in the background for a specified time. The active behaviors include but are not limited to: behaviors such as data interaction with a cloud server and reading information of the terminal device.

In some other cases, the user may also preset whether to freeze the application program. The user may unfreeze an application program set to a frozen state by the application processor, and may also freeze an application program set to not enter a frozen state by the application processor.

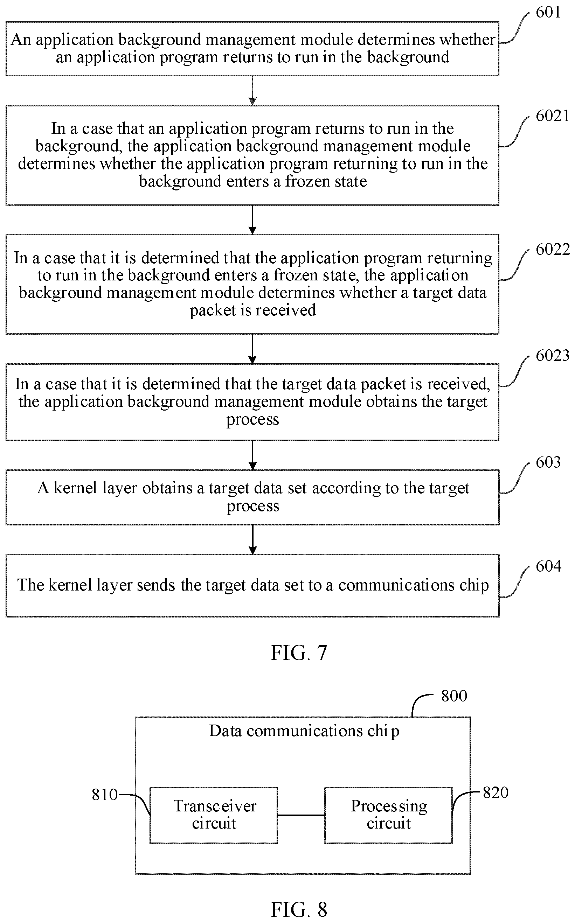

If a process still receives, when the application program is in a frozen state, a data packet sent by the cloud server, in this embodiment, the process is preferentially added to a blacklist. Even if the capacity of the filtering rule is limited, the communications chip may first filter out a data packet corresponding to the process. Specifically, referring to FIG. 7, the application processor performs step 6021 to step 6023 instead of step 602 to achieve the above purpose.

Step 6021: In a case that an application program exits to run in the background, the application background management module determines whether the application program exiting to run in the background enters a frozen state.

In an implementation, after the application program runs in the background, if determining that the application program may be frozen, the application background management module may monitor, through timing, whether the application program enters a frozen state, and when the application program runs in the background for a specified time, determine that the application program enters a frozen state.

In another implementation, the application background management module determines, by monitoring a life cycle of the application program, whether the application program enters a frozen state.

Step 6022: In a case that it is determined that the application program exiting to run in the background enters a frozen state, the application background management module determines whether a target data packet is received, where the target data packet is a data packet sent by the cloud server for the application program entering the frozen state.

After receiving a data packet sent by the cloud server, the application background management module parses the data packet to obtain a destination port number corresponding to the data packet. If the destination port number of the data packet corresponds to a process of the application program in the frozen state, it may be determined that the data packet is the target data packet.

Step 6023: In a case that it is determined that the target data packet is received, the application background management module obtains the target process.

When the target data packet is detected, it means that the process corresponding to the target data packet should be in a frozen state, but is still active. In this case, the process corresponding to the destination port number of the target data packet is set as the target process, and a filtering command may be preferentially generated subsequently for the process, so that once the communications chip receives the target data packet, the communications chip can directly discard the target data packet.

The application background management module may perform step 6021 to step 6023 to monitor only the application program in a frozen state, and set a process that still has an active behavior as the target process, and then step 603 and step 604 are performed, so that the kernel layer obtains a target data set of each target process and sends the target data set to the filtering rule of the communications chip. In this way, a number of port numbers and protocol numbers to be stored in the filtering rule can be reduced, and the data packet filtering efficiency of the communications chip is effectively improved while ensuring that the data packet of the application program in a frozen state is preferentially filtered out.

In some cases, when an application program runs in the background, only some processes may be frozen, and the remaining processes continue to run in the background. In this embodiment, only processes in the frozen state may be monitored. If the processes in the frozen state are still active and there is still a data packet sent by the cloud server, port numbers and protocol numbers of these processes may be stored in the filtering rule, and a filtering operation is preferentially performed on data packets corresponding to these processes.

Based on the filtering rule generation method disclosed in the above embodiment, after the kernel layer sends the target data set to the communications chip, the communications chip establishes a correspondence between a group of port number and protocol number and a process for each target data set while storing the received data in the filtering rule, so that a group of port number and protocol number corresponds to an application program process. Subsequently, the accuracy and efficiency can be improved when a filtering operation is performed on a received data packet.

Next, an operation occasion of storing the filtering rule in the communications chip is described.

When an application program runs in the background, a running state of the terminal device may include the following three cases:

In a first case, after a user exits to run the application program in the background, the user keeps operating the terminal device, so that the terminal device is always in the first state, that is, the terminal device is in a screen-on state and works normally.

In a second case, after a user exits to run the application program in the background, the user no longer operates the terminal device, and the terminal device is first in the first state, and after a period of time, the terminal device enters the second state, that is, the terminal device is in a screen-off state, but has not entered a dormant state, and then the terminal device enters a third state, that is, the terminal device is in a screen-off state and has entered a dormant state.

In a third case, when a user exits to run the application program in the background, the user directly turns off the screen of the terminal device, so that the terminal device directly enters the third state.

In the filtering rule generation method disclosed in this embodiment, no matter which of the above cases the terminal device is in, as long as the application program runs in the background, the application background management module and the kernel layer in the application processor perform corresponding operations. If the port number and the protocol number of the target process may be stored in the filtering rule of the communications chip before the terminal device enters the third state, so that when the terminal device just enters the third state, the communications chip can directly filter out a data packet corresponding to the corresponding process, the power consumption of the terminal device can be reduced to the greatest extent.

In the data communication method provided in this application, once the application program runs in the background, the application processor determines whether to execute a filtering command for each process of the application program. Once it is determined that all or some processes of the application program need to be filtered out, port numbers and protocol numbers corresponding to these processes are added to the filtering rule of the communications chip. When the terminal device enters the dormant state with the screen off, the communications chip may automatically filter out a data packet sent by a corresponding cloud server without waking up the application processor. This can effectively reduce the number of times the dormant state of the terminal device is interrupted and reduce power consumption of the terminal device.

In some cases, the data communication method disclosed in the above embodiment may also be performed for a thread. An execution procedure is the same, except that an execution object is replaced by a thread. A thread is the smallest execution unit of an application program, a process may include one or more threads, and a thread is a different execution route of code in a process. When an application program runs, a thread establishes a connection with a cloud server for data exchange.

When the application program runs in the background, the application processor determines whether to execute a filtering command for each thread of the application program. Once it is determined that all or some threads of the application program need to be filtered out, port numbers and protocol numbers corresponding to these threads are added to the filtering rule of the communications chip.

Apparatus embodiments of this application are described below, and an apparatus may be configured to execute the method embodiments of this application. For details not disclosed in the apparatus embodiments of this application, refer to the method embodiments of this application.

A second embodiment of this application discloses a data communications chip. Referring to FIG. 8, a data communications chip 800 shown in FIG. 8 includes a transceiver circuit 810 and a processing circuit 820. The processing circuit 820 may be a processor and functions to perform operations such as control and logical determining. The transceiver circuit 810 functions to perform data transmission and reception.

In some embodiments, referring to FIG. 3, if the WiFi chip 311 or the modem chip 312 performs a data packet filtering operation, the transceiver circuit 810 and the processing circuit 820 are both provided in the WiFi chip 311 and are both provided in the modem chip 312.

In some other embodiments, referring to FIG. 4, if the MCU chip 313 performs a data packet filtering operation, the WiFi chip 311 and the modem chip 312 may be configured to only send and receive a data packet. Therefore, the transceiver circuit 810 may be provided in the WiFi chip 311 and the modem chip 312, and the processing circuit 820 may be provided in the MCU chip 313. In this case, the processing circuit 820 is a micro control chip.

The transceiver circuit 810 is configured to: receive a to-be-processed data packet, where the to-be-processed data packet is a data packet sent by a cloud server.

The processing circuit is configured to: obtain a to-be-identified process, where the to-be-identified process is a process corresponding to the to-be-processed data packet; determine whether the to-be-identified process exists in a preset filtering rule, where the filtering rule includes at least one process that is restricted from communicating with the cloud server; and in a case that the to-be-identified process exists in the filtering rule, skip forwarding the to-be-processed data packet to an application processor.

The data communications chip disclosed in this embodiment includes the transceiver circuit 810 and the processing circuit 820. When the transceiver circuit 810 receives the data packet sent by the cloud server, the processing circuit 820 identifies the data packet and determines whether the data packet needs to be filtered out. If the data packet needs to be filtered out, the processing circuit 820 directly discards the data packet, to avoid waking up the application processor. This can effectively reduce the number of times the dormant state of the terminal device is interrupted and reduce power consumption of the terminal device.

In an implementation, when obtaining the to-be-identified process, the processing circuit 820 is configured to: obtain a destination port number and a protocol number of the to-be-processed data packet; and obtain the to-be-identified process according to the destination port number and the protocol number of the to-be-processed data packet.

The processing circuit 820 parses the data packet, so that the destination port number and the protocol number of the data packet may be obtained, to accurately locate the process of the application program to which the data packet is to be sent, to obtain the to-be-identified process.

In an implementation, when determining whether the to-be-identified process exists in the preset filtering rule, the processing circuit 820 is configured to: determine whether the destination port number and the protocol number of the to-be-processed data packet exist in the preset filtering rule, where the filtering rule includes multiple groups of port numbers and protocol numbers, and each group of port number and protocol number corresponds to a process that is restricted from communicating with the cloud server.

In an implementation, the processing circuit 820 is further configured to: in a case that the to-be-identified process does not exist in the filtering rule, forward the to-be-processed data packet to the application processor.

Only when the to-be-identified process is allowed to communicate with the cloud server and the corresponding to-be-processed data packet is allowed to pass, the processing circuit 820 forwards the data packet to the application processor for subsequent processing.

In an implementation, the processing circuit 820 is further configured to: receive at least one target data set sent by the application processor, where each target data set includes a port number and a protocol number of a target process, and the target process is a process that is in an application program running in the background and that needs to be restricted from communicating with the cloud server; and add the target data set to the filtering rule.

In an implementation, the processing circuit 820 is further configured to: receive at least one target data set sent by the application processor, where each target data set includes a port number and a protocol number of a target process, and the target process is a process that is in an application program exiting from the foreground to run in the background and that needs to be restricted from communicating with the cloud server; and add the target data set to the filtering rule.

The processing circuit 820 pre-stores the filtering rule, and when performing the data packet filtering operation according to the filtering rule, receives the target data set sent by the application processor and updates the filtering rule based on the target data set, so as to ensure accuracy of the data packet filtering operation.

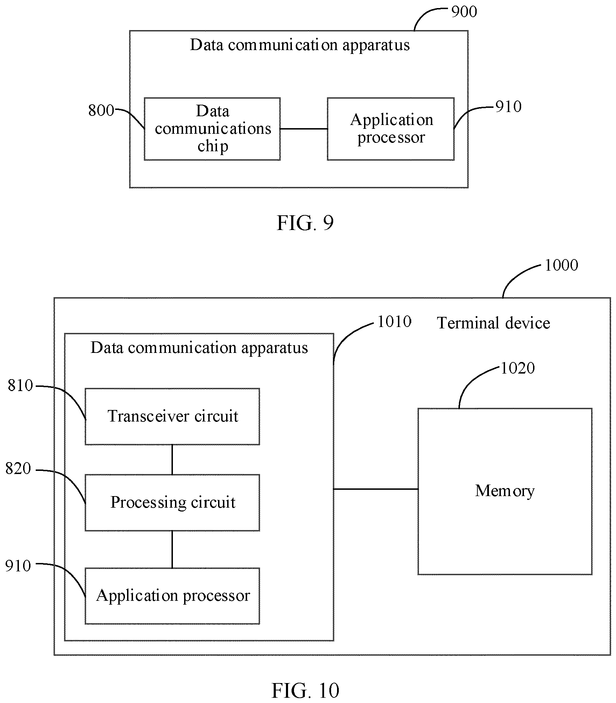

A third embodiment of this application discloses a data communication apparatus. Referring to FIG. 9, a data communication apparatus 900 includes the data communications chip 800 as described in the second embodiment of this application and an application processor 910.

The application processor 910 disclosed in this embodiment includes an application background management module and a kernel layer. Operations performed by the application background management module and the kernel layer may be specified with reference to the flowcharts disclosed in FIG. 3 and FIG. 4, and are not repeated in this embodiment. The application processor 910 provided in this embodiment may generate the filtering rule for an application program running in the background, and then update the filtering rule in the processing circuit 820 to ensure accuracy and real-time performance of data packet filtering.

The application processor 910 is configured to: before the processing circuit 820 receives the at least one target data set sent by the application processor, determine whether an application program exits to run in the background; in a case that an application program exits to run in the background, obtain the target process; obtain the target data set according to the target process, where the target data group includes the port number and the protocol number of the target process; and send the target data set to the processing circuit 820.

The application processor 910 disclosed in this embodiment may determine whether a filtering operation needs to be performed on each process of the application program running in the background, and when determining that all or some processes of the application program need to be filtered out, send target data sets corresponding to these processes to the processing circuit 820, so that the processing circuit 820 adds the target data sets to the filtering rule to update the filtering rule, and performs, according to the updated filtering rule, a filtering operation on the data packet corresponding to the target process. Subsequently, once the transceiver circuit 810 receives a data packet sent by the cloud server, the processing circuit 820 directly discards the data packet and no longer forwards the data packet to the application processor 910. In this way, when the terminal device enters the dormant state with the screen off, this can effectively reduce the number of times the dormant state of the terminal device is interrupted and reduce power consumption of the terminal device.

In an implementation, when obtaining the target process, the application processor 910 is configured to: determine whether the application program exiting to run in the background enters a frozen state; in a case that it is determined that the application program exiting to run in the background enters a frozen state, determine whether a target data packet is received, where the target data packet is a data packet sent by the cloud server for the application program entering the frozen state; and in a case that it is determined that the target data packet is received, obtain the target process.

The application processor 910 disclosed in this embodiment may monitor only the application program in a frozen state, set a process that still has an active behavior as the target process, and then obtain a target data set of each target process and add the target data set to the filtering rule of the processing circuit 820. In this way, a number of port numbers and protocol numbers to be stored in the filtering rule can be reduced, and the data packet filtering efficiency of the communications chip is effectively improved while ensuring that the data packet of the application program in a frozen state is preferentially filtered out.

In an implementation, when obtaining the target process, the application processor 910 is configured to: obtain a destination port number of the target data packet; and obtain the target process according to the destination port number of the target data packet.

In an implementation, when obtaining the target data set according to the target process, the application processor 910 is configured to: obtain socket information according to the target process, where the socket information includes a port number and a protocol number of the target process; and obtain the target data set according to the socket information. The application processor 910 may obtain a source port number and the protocol number of the target process according to the socket information of the process, and then may obtain the target data set of each target process.

A fourth embodiment of this application discloses a terminal device, including the data communication apparatus described in the third embodiment of this application.

A fifth embodiment of this application discloses a terminal device. Referring to FIG. 10, a terminal device 1000 includes: at least one data communication apparatus 1010 and a memory 1020. The data communication apparatus 1010 in this embodiment corresponds to the data communication device 900 in the third embodiment of this application. The memory 1020 is configured to store program instructions. The data communication apparatus 1010 is configured to call and execute the program instructions stored in the memory 1020, so that the terminal device executes the data communication methods shown in FIG. 5, FIG. 6, and FIG. 7.

In some implementations, referring to FIG. 10, the data communication device 1010 may include the transceiver circuit 810 and the processing circuit 820 shown in FIG. 8 and the application processor 910 shown in FIG. 9. The transceiver circuit 810 and the processing circuit 820 are mainly configured to perform a data packet filtering operation. The application processor 910 is mainly configured to perform a filtering rule generation operation.

A sixth embodiment of this application discloses a terminal device, including: at least one processor and a memory. The memory is configured to store program instructions. The processor is configured to call and execute the program instructions stored in the memory, so that the terminal device executes the data communication methods shown in FIG. 5, FIG. 6, and FIG. 7.

In some embodiments, this application further provides a data communication apparatus, which may be configured to perform the functions performed by the data communication apparatus described in the foregoing embodiments. The functions of the data communication apparatus may be implemented by hardware, or may be implemented by hardware executing corresponding software. The hardware or software includes one or more modules or units corresponding to the above functions.

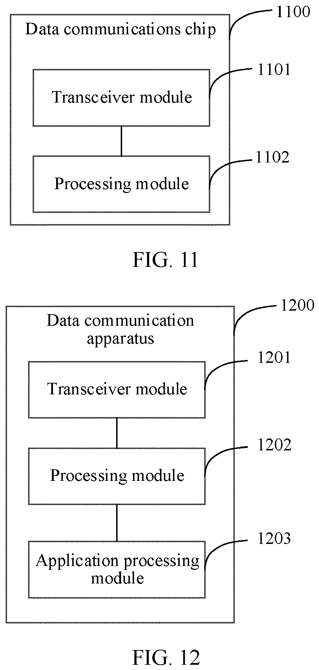

A seventh embodiment of this application discloses a data communications chip. Referring to FIG. 11, FIG. 11 is a schematic structural diagram of a data communications chip. As shown in FIG. 11, a data communications chip 1100 includes a transceiver module 1101 and a processing module 1102. The data communications chip 1100 corresponds to the data communications chip 800 in FIG. 8, the transceiver module 1101 is configured to perform the functions of the transceiver circuit 810 in FIG. 8, and the processing module 1102 is configured to perform the functions of the processing circuit 820 in FIG. 8.

In some implementations, the transceiver module 1101 is configured to receive a to-be-processed data packet, where the to-be-processed data packet is a data packet sent by a cloud server. The processing module 1102 is configured to: obtain a to-be-identified process, where the to-be-identified process is a process corresponding to the to-be-processed data packet; determine whether the to-be-identified process exists in a preset filtering rule, where the filtering rule includes at least one process that is restricted from communicating with the cloud server; and in a case that the to-be-identified process exists in the filtering rule, skip forwarding the to-be-processed data packet to an application processor.

The data communications chip 1100 disclosed in this embodiment includes the transceiver module 1101 and the processing module 1102. When the transceiver module 1101 receives the data packet sent by the cloud server, the processing module 1102 identifies the data packet to determine whether the data packet needs to be filtered out, and if the data packet needs to be filtered out, the processing module 1102 directly discards the data packet, to avoid waking up the application processor. This can effectively reduce the number of times the dormant state of the terminal device is interrupted and reduce power consumption of the terminal device.

An eighth embodiment of this application further provides a data communication apparatus. Referring to FIG. 12, FIG. 12 is a schematic structural diagram of a data communication apparatus according to an embodiment of this application. As shown in FIG. 12, the data communication apparatus 1200 may include a transceiver module 1201, a processing module 1202, and an application processing module 1203. The transceiver module 1201 corresponds to the transceiver module 1101 in FIG. 11, and is configured to perform the functions of the transceiver circuit 810 in FIG. 8. The processing module 1202 corresponds to the processing module 1102 in FIG. 11, and is configured to perform the functions of the processing circuit 820 in FIG. 8. The application processing module 1203 is configured to perform the functions of the application processor 910 in FIG. 9.

The data communication apparatus disclosed in this embodiment includes the transceiver module 1201 and the processing module 1202, and may perform a filtering operation on the data packet sent by the cloud server. When the terminal device is in a screen-off state and enters a dormant state, if the transceiver module 1201 receives the data packet sent by the cloud server, the processing module 1202 identifies the data packet to determine whether the data packet needs to be filtered out, and if the data packet needs to be filtered out, the processing module 1202 directly discards the data packet and no longer forwards the data packet to the application processing module 1203, to avoid waking up the application processor. This can effectively reduce the number of times the dormant state of the terminal device is interrupted and reduce power consumption of the terminal device.

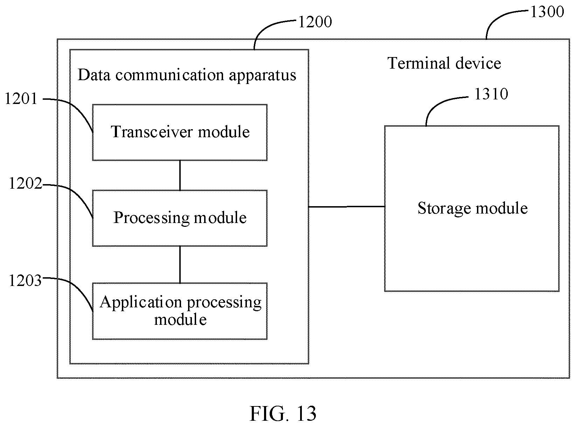

A ninth embodiment of this application further provides a terminal device. Referring to FIG. 13, FIG. 13 is also a schematic structural diagram of a terminal device according to an embodiment of this application. As shown in FIG. 13, a terminal device 1300 may include the data communication apparatus 1200 described in the eighth embodiment and a storage module 1310. The functions of the terminal device may be implemented by hardware, or may be implemented by hardware executing corresponding software. The hardware or software includes one or more modules or units corresponding to the above functions.

In the terminal device disclosed in this embodiment, the transceiver module 1201 and the processing module 1202 in the data communication apparatus 1200 perform a filtering operation on the data packet sent by the cloud server. When the terminal device is in a screen-off state and enters a dormant state, if the transceiver module 1201 receives the data packet sent by the cloud server, the processing module 1202 identifies the data packet to determine whether the data packet needs to be filtered out, and if the data packet needs to be filtered out, the processing module 1202 directly discards the data packet and no longer forwards the data packet to the application processing module 1203, to avoid waking up the application processor. This can effectively reduce the number of times the dormant state of the terminal device is interrupted and reduce power consumption of the terminal device.

In some implementations, the steps of the method or algorithm described in the embodiments of this application may be directly embedded in hardware, in a software unit executed by a processor, or in a combination thereof. The software unit may be stored in a random access memory (RAM), a flash memory, a read-only memory (ROM), an electrically programmable ROM (EPROM), an electrically erasable programmable ROM (EEPROM), a register, a hard disk, a removable disk, a compact disc ROM (CD-ROM), or any other form of storage medium in the art. For example, the storage medium (or memory) may be connected to the processor so that the processor can read information from the storage medium and write information to the storage medium. Optionally, the storage medium may be integrated in the processor. The processor and the storage medium may be disposed in the ASIC, and the ASIC may be disposed in a UE. Optionally, the processor and the storage medium may be disposed in different components of the UE.

A tenth embodiment of this application discloses a computer-readable storage medium, storing instructions, the instructions, when running on a computer, causing the computer to perform the data communication method according of FIG. 5, FIG. 6, and FIG. 7.

The storage medium of the computer-readable storage medium may be a magnetic disk, an optical disc, a read-only memory (English: read-only memory, ROM for short), a random access memory (English: random access memory, RAM for short), or the like.

An eleventh embodiment of this application provides a computer program product including instructions, the computer program product, when running on a terminal device, causing the terminal device to perform the data communication method according of FIG. 5, FIG. 6, and FIG. 7.

It should be understood that sequence numbers of the foregoing processes do not mean execution sequences in various embodiments of this application. The execution sequences of the processes should be determined according application functions and internal logic of the processes, and should not be construed as any limitation on the implementation processes of the embodiments of this application.

This application is described in detail above with reference to the specific embodiments and exemplary examples, but these descriptions cannot be understood as restrictions on this application. A person skilled in the art understands that, a variety of equivalent replacements, modifications or improvements may be made to the technical solutions and implementations of this application without departing from the spirit and scope of this application. These fall within the scope of this application. The protection scope of this application is subject to the appended claims.

## Claims

1. A data communication method, comprising:
receiving, by a communications chip of a terminal device, a to-be-processed data packet, wherein the to-be-processed data packet is a data packet sent by a cloud server;
obtaining, by the communications chip, a to-be-identified process, wherein the to-be-identified process is a process corresponding to the to-be-processed data packet;
determining, by the communications chip, whether the to-be-identified process exists in a preset filtering rule, wherein the filtering rule comprises at least one process that is restricted from communicating with the cloud server; and
in a case that the to-be-identified process exists in the filtering rule, skipping, by the communications chip, forwarding the to-be-processed data packet to an application processor of the terminal device.

2. The data communication method according to claim 1, wherein the obtaining, by the communications chip, a to-be-identified process comprises:
obtaining, by the communications chip, a destination port number and a protocol number of the to-be-processed data packet; and
obtaining, by the communications chip, the to-be-identified process according to the destination port number and the protocol number of the to-be-processed data packet.

3. The data communication method according to claim 1 or 2, wherein the determining, by the communications chip, whether the to-be-identified process exists in a preset filtering rule comprises:
determining, by the communications chip, whether the destination port number and the protocol number of the to-be-processed data packet exist in the preset filtering rule, wherein the filtering rule comprises multiple groups of port numbers and protocol numbers, and each group of port number and protocol number corresponds to a process that is restricted from communicating with the cloud server.

4. The data communication method according to any one of claims 1 to 3, wherein the method further comprises:
in a case that the to-be-identified process does not exist in the filtering rule, forwarding, by the communications chip, the to-be-processed data packet to the application processor.

5. The data communication method according to any one of claims 1 to 4, wherein the method further comprises:
receiving, by the communications chip, at least one target data set sent by the application processor, wherein each target data set comprises a port number and a protocol number of a target process, and the target process is a process that is in an application program running in the background and that needs to be restricted from communicating with the cloud server; and
adding, by the communications chip, the target data set to the filtering rule.

6. The data communication method according to any one of claims 1 to 4, wherein the method further comprises:
receiving, by the communications chip, at least one target data set sent by the application processor, wherein each target data set comprises a port number and a protocol number of a target process, and the target process is a process that is in an application program exiting from the foreground to run in the background and that needs to be restricted from data exchange with the cloud server; and
adding, by the communications chip, the target data set to the filtering rule.

7. The data communication method according to claim 5 or 6, wherein before the receiving, by the communications chip, at least one target data set sent by the application processor, the method further comprises:
determining, by the application processor, whether an application program exits to run in the background;
in a case that an application program exits to run in the background, obtaining, by the application processor, the target process;
obtaining, by the application processor, the target data set according to the target process, wherein the target data set comprises the port number and the protocol number of the target process; and
sending, by the application processor, the target data set to the communications chip.

8. The data communication method according to claim 7, wherein the obtaining, by the application processor, the target process comprises:
determining, by the application processor, whether the application program exiting to run in the background enters a frozen state;
in a case that it is determined that the application program exiting to run in the background enters a frozen state, determining, by the application processor, whether a target data packet is received, wherein the target data packet is a data packet sent by the cloud server for the application program entering the frozen state; and
in a case that it is determined that the target data packet is received, obtaining, by the application processor, the target process.

9. The data communication method according to claim 8, wherein the obtaining, by the application processor, the target process comprises:
obtaining, by the application processor, the destination port number of the target data packet; and
obtaining, by the application processor, the target process according to the destination port number of the target data packet.

10. The data communication method according to claim 7, wherein the obtaining, by the application processor, the target data set according to the target process comprises:
obtaining, by the application processor, socket information according to the target process, wherein the socket information comprises a port number and a protocol number of the target process; and
obtaining, by the application processor, the target data set according to the socket information.

11. The data communication method according to any one of claims 1 to 10, wherein the communications chip comprises a micro control chip and a data transceiver chip; and
the data transceiver chip comprises a modem chip and/or a wireless fidelity chip.

12. A data communications chip, comprising a transceiver circuit and a processing circuit;
wherein the transceiver circuit is configured to:
receive a to-be-processed data packet, wherein the to-be-processed data packet is a data packet sent by a cloud server; and
the processing circuit is configured to:
obtain a to-be-identified process, wherein the to-be-identified process is a process corresponding to the to-be-processed data packet;
determine whether the to-be-identified process exists in a preset filtering rule, wherein the filtering rule comprises at least one process that is restricted from communicating with the cloud server; and
in a case that the to-be-identified process exists in the filtering rule, skip forwarding the to-be-processed data packet to an application processor.

13. The data communications chip according to claim 12, wherein when obtaining the to-be-identified process, the processing circuit is configured to:
obtain a destination port number and a protocol number of the to-be-processed data packet; and
obtain the to-be-identified process according to the destination port number and the protocol number of the to-be-processed data packet.

14. The data communications chip according to claim 12 or 13, wherein when determining whether the to-be-identified process exists in the preset filtering rule, the processing circuit is configured to:
determine whether the destination port number and the protocol number of the to-be-processed data packet exist in the preset filtering rule, wherein the filtering rule comprises multiple groups of port numbers and protocol numbers, and each group of port number and protocol number corresponds to a process that is restricted from communicating with the cloud server.

15. The data communications chip according to any one of claims 12 to 14, wherein the processing circuit is further configured to:
in a case that the to-be-identified process does not exist in the filtering rule, forward the to-be-processed data packet to the application processor.

16. The data communications chip according to any one of claims 12 to 15, wherein the processing circuit is further configured to:
receive at least one target data set sent by the application processor, wherein each target data set comprises a port number and a protocol number of a target process, and the target process is a process that is in an application program running in the background and that needs to be restricted from communicating with the cloud server; and
add the target data set to the filtering rule.

17. The data communications chip according to any one of claims 12 to 15, wherein the processing circuit is further configured to:
receive at least one target data set sent by the application processor, wherein each target data set comprises a port number and a protocol number of a target process, and the target process is a process that is in an application program exiting from the foreground to run in the background and that needs to be restricted from communicating with the cloud server; and
add the target data set to the filtering rule.

18. The data communications chip according to any one of claims 12 to 17, wherein the processing circuit is a micro control chip.

19. A data communication apparatus, comprising the data communications chip according to any one of claims 12 to 18 and an application processor; wherein
the application processor is configured to:
before a processing circuit receives at least one target data set sent by the application processor, determine whether an application program exits to run in the background;
in a case that an application program exits to run in the background, obtain a target process;
obtain a target data set according to the target process, wherein the target data set comprises a port number and a protocol number of the target process; and
send the target data set to the processing circuit.

20. The data communication apparatus according to claim 19, wherein when obtaining the target process, the application processor is configured to:
determine whether the application program exiting to run in the background enters a frozen state;
in a case that it is determined that the application program exiting to run in the background enters a frozen state, determine whether a target data packet is received, wherein the target data packet is a data packet sent by the cloud server for the application program entering the frozen state; and
in a case that it is determined that the target data packet is received, obtain the target process.

21. The data communication apparatus according to claim 20, wherein when obtaining the target process, the application processor is configured to:
obtain the destination port number of the target data packet; and
obtain the target process according to the destination port number of the target data packet.

22. The data communication apparatus according to claim 19, wherein when obtaining the target data set according to the target process, the application processor is configured to:
obtain socket information according to the target process, wherein the socket information comprises a port number and a protocol number of the target process; and
obtain the target data set according to the socket information.

23. A terminal device, comprising the data communication apparatus according to any one of claims 19 to 22.

24. A terminal device, comprising:
at least one processor and a memory; wherein
the memory is configured to store program instructions; and
the processor is configured to call and execute the program instructions stored in the memory, so that the terminal device executes the data communication method according to any one of claims 1 to 11.

25. A computer-readable storage medium, wherein
the computer-readable storage medium stores instructions, and when the computer-readable storage medium runs on a computer, the computer is caused to perform the data communication method according to any one of claims 1 to 11.
